# FASCICULE DE BREVET EUROPEEN

(11) **EP 1 720 728 B1**
(45) Date de publication et mention de la délivrance du brevet: **21.11.2007**
(21) Numéro de dépôt: 05728287.3
(22) Date de dépôt: 10.02.2005
(51) Int. Cl.: B60K 31/00

(54) **PROCEDE ET SYSTEME DE LIMITATION DE VITESSE A CONTROLE EN DISTANCE POUR VEHICULE AUTOMOBILE**
VERFAHREN UND SYSTEM ZUR FERNSTEUERUNG DER GESCHWINDIGKEITSBESCHRÄNKUNG FÜR EIN KRAFTFAHRZEUG
METHOD AND SYSTEM FOR REMOTELY CONTROLLING SPEED LIMITATION FOR A MOTOR VEHICLE

(30) Priorité: 17.02.2004 FR 0401575
(43) Date de publication de la demande: 15.11.2006
(73) Titulaire: Renault SAS, 92100 Boulogne Billancourt (FR)
(72) Inventeur: JARRIX, Jean Paul, F-92600 Asnières (FR); PETIT, Jean Antoine, F-27910 Les Hogues (FR); SALESSE, Laurent, F-91471 Les Molières (FR)
(74) Mandataire: Guyon, Rodolphe C.
(86) Numéro de dépôt international: PCT/FR2005/050084
(87) Numéro de publication internationale: WO 2005/080118

(56) Documents cités:
- EP-A- 1 070 624
- DE-A- 4 437 678
- FR-A- 2 755 650

## Description

La présente invention concerne un procédé de limitation de la vitesse pour véhicule automobile avec contrôle en distance par rapport au véhicule qui le précède dans la même voie de circulation. Ce système aide le conducteur à respecter une limitation de vitesse et/ou un temps de suivi avec le véhicule qui le précède, temps défini par le rapport entre la distance séparant les deux véhicules et la vitesse du véhicule équipé du système. Elle concerne également un système de mise en oeuvre de ce procédé.

Il existe actuellement des systèmes de limitation de la vitesse d'un véhicule à une valeur fixée par le conducteur, destinés à empêcher le conducteur de dépasser une valeur limite de consigne qu'il a choisie, sauf par une manoeuvre spéciale volontaire.

Un tel système limiteur de vitesse comporte notamment une pédale d'accélérateur, ou tout organe de commande de puissance du moteur manoeuvrable par le conducteur, permettant de faire accélérer le véhicule. Il comporte de plus des moyens donnant à la pédale une première course active puis une seconde course morte jusqu'à un point dur, qui se manifeste en un point fixe du trajet de la pédale, quelle que soit la vitesse limite choisie.

L'information de position de la pédale d'accélérateur est transformée en un signal de demande d'accélération de la part du conducteur qu'un calculateur électronique va comparer à un signal de demande d'accélération dû à la régulation de vitesse et calculé en fonction de la différence entre la vitesse réelle du véhicule et la vitesse de consigne. La comparaison entre ces deux signaux de demande d'accélération, dû à la régulation de vitesse d'une part et dû à la pédale d'autre part, permet de déterminer un signal de commande d'accélération du véhicule.

Un exemple de réalisation d'un limiteur de vitesse est décrit dans la demande de brevet publiée sous le No. FR 2 755 650, au nom de RENAULT divulguant les caractéristiques du préambule de la revendication 1. Dans cet exemple, la pédale comporte une course morte entre une première course active et un point dur, et ce point dur se manifeste en un point fixe du trajet de la pédale, quelle que soit la vitesse limite choisie.

Le limiteur de vitesse limite le couple du moteur du véhicule, pour empêcher le dépassement d'une vitesse limite fixée par le conducteur, sans action sur le système de freinage. Tant que cette valeur limite n'est pas atteinte, la relation qui relit la position de la pédale d'accélérateur au couple moteur est identique à celle qui existe lorsque le limiteur est inactif, c'est-à-dire qu'un appui sur la pédale augmente l'accélération et qu'un levé de pied provoque une décélération, mais quand la vitesse limite de consigne est atteinte, le couple moteur est limité a une valeur qui ne permet pas au véhicule de dépasser cette vitesse. Tout enfoncement supplémentaire de la pédale au-delà de cette position de référence est sans effet sur la valeur de couple et donc sur la vitesse du véhicule, et correspond à une zone ou course morte de la pédale.

Par contre, tout relâchement de la pédale d'accélérateur en deçà de cette position de référence, fixant la vitesse de consigne du véhicule, autorise une décélération du véhicule car la relation entre le couple moteur et la position de la pédale est à nouveau valide.

Lorsque le véhicule équipé du limiteur de vitesse est en approche sur un véhicule plus lent que lui, le conducteur va devoir, pour réduire sa vitesse, agir sur la pédale d'accélérateur en levant le pied ou bien sur la pédale de frein en l'enfonçant.

DE 44 37678 A divulgue un procédé de contrôle de distance permettant au conducteur de varier la distance à un véhicule cible en agissant sur les pédales, sans désactivation du procédé.

Il existe d'autre part des systèmes régulateurs de vitesse à contrôle en distance - Adaptative Cruise Control - ACC, qui contrôlent la puissance du moteur et les freins du véhicule dans le but de :
- réguler la vitesse du véhicule équipé à une valeur constante sans intervention du conducteur sur la pédale d'accélérateur ;
- ajuster la vitesse du véhicule à une valeur égale à celle du véhicule qui le précède, roulant plus lentement dans la même voie de circulation ;
- maintenir un temps de suivi constant avec le véhicule qui le précède à une vitesse inférieure, dans la même voie de circulation.

Pour réduire l'accélération déterminée automatiquement par le système, le conducteur doit appuyer sur la pédale de freins ou bien agir sur une touche placée au volant ou au tableau de bord, ces deux actions ayant pour effet de désactiver le système de régulation de vitesse à contrôle en distance. L'accélération peut également être réduite par action du conducteur sur l'organe de la vitesse de consigne, pas toujours bien adapté à tous les types de situations. En particulier, certaines situations routières complexes sont mal gérées par le télémètre placé à bord du véhicule, pouvant provoquer des re-accélérations inconfortables du véhicule dues à des pertes momentanées de détection des véhicules dans la voie, dans les virages par exemple.

L'invention a pour but de pallier les inconvénients de ces deux types de systèmes précédemment décrits, c'est-à-dire devoir freiner en limitation de vitesse, en phase d'approche, d'une part, et désactiver la régulation de vitesse pour réduire l'accélération d'autre part.

Pour cela, un premier objet de l'invention est un procédé de limitation de vitesse à contrôle en distance pour véhicule automobile équipé de moyens de télémétrie, destinés à estimer la distance et la vitesse des véhicules circulant dans la même voie de circulation que le véhicule, et de moyens d'asservissement du fonctionnement du moteur en vitesse et en distance, caractérisé en ce qu'il réalise les étapes suivantes :
-a) activation du procédé ;
-b) choix d'une consigne de vitesse ;
-c) vérification de l'absence de véhicule cible plus lent dans la même voie de circulation, et si oui :
-e) limitation du couple moteur par action du conducteur sur la pédale d'accélération tant que la vitesse véhicule est inférieure à la vitesse de consigne et par contrôle automatique quand la vitesse de consigne est atteinte ou dépassée, avec possibilité de désactivation du procédé ;
-d) vérification de la présence d'un véhicule cible plus lent précédant le véhicule équipé dans la même voie de circulation, et si oui :
-f) réduction automatique de la vitesse et maintien d'un temps de suivi constant entre les deux véhicules, réglable par le conducteur ;
-g) réduction, permise au conducteur, de la vitesse déterminée par le procédé, par un levé de pied sur la pédale d'accélérateur ou un appui sur le frein sans désactivation du procédé de limitation de vitesse ;
-h) vérification de la vitesse du véhicule cible, et en cas d'augmentation au-delà de la vitesse de consigne, possibilité d'accélération pour le conducteur du véhicule équipé jusqu'à la consigne de vitesse ou de distance si le véhicule cible est à nouveau rattrapé.

Un second objet de l'invention est un système de mise en oeuvre dudit procédé de limitation de la vitesse à contrôle en distance pour véhicule automobile, comprenant des premiers moyens de télémétrie destinés à estimer la distance et la vitesse des véhicules circulant dans la même voie de circulation que le véhicule équipé, et des seconds moyens d'asservissement du fonctionnement du moteur en vitesse et en distance, recevant en entrée une consigne de vitesse et une consigne de temps de suivi et délivrant une commande d'accélération et de freinage du véhicule, caractérisé en ce qu'il comporte de plus :
- des troisièmes moyens de reconstruction de la demande de freinage du conducteur, destinés à délivrer un signal homogène avec la commande de freinage délivrée par les moyens d'asservissement précédents ;
- des quatrièmes moyens de reconstruction de la demande d'accélération du conducteur, destinés à délivrer un signal homogène avec la commande d'accélération délivrée par les moyens d'asservissement précédents ;
- des cinquièmes moyens d'arbitrage entre le signal de freinage demandé par le conducteur et la commande de freinage par calcul de la valeur maximale entre ces deux valeurs de freinage ;
- des sixièmes moyens d'arbitrage entre le signal d'accélération demandé par le conducteur et la commande d'accélération par calcul de la valeur minimale entre ces deux valeurs d'accélération ;
- des septièmes moyens d'arbitrage entre le contrôle du freinage et celui de l'accélération par choix prioritaire du freinage sur l'accélération, délivrant des signaux de commande à l'organe de freinage du véhicule et au moteur.

D'autres caractéristiques et avantages de l'invention apparaîtront à la lecture de la description illustrée par tes figures suivantes :

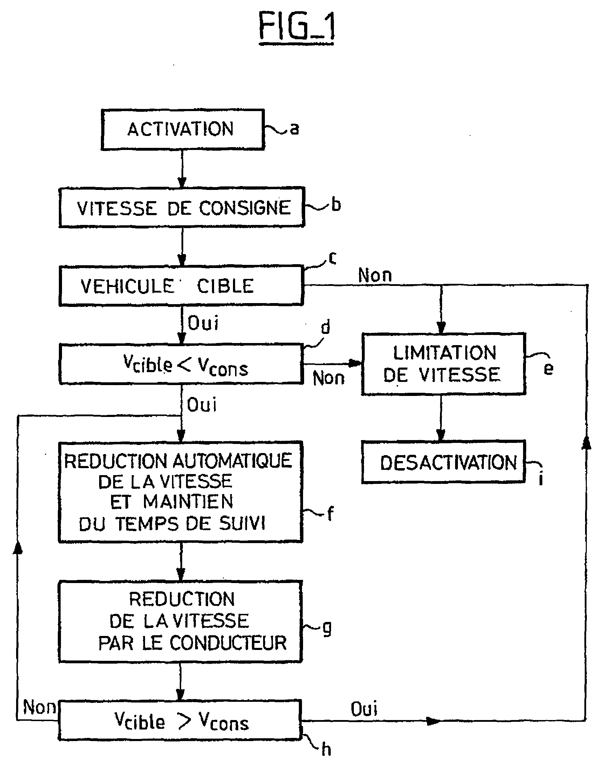

- la figure 1 : un procédé de limitation de vitesse avec contrôle en distance d'un véhicule selon l'invention ;

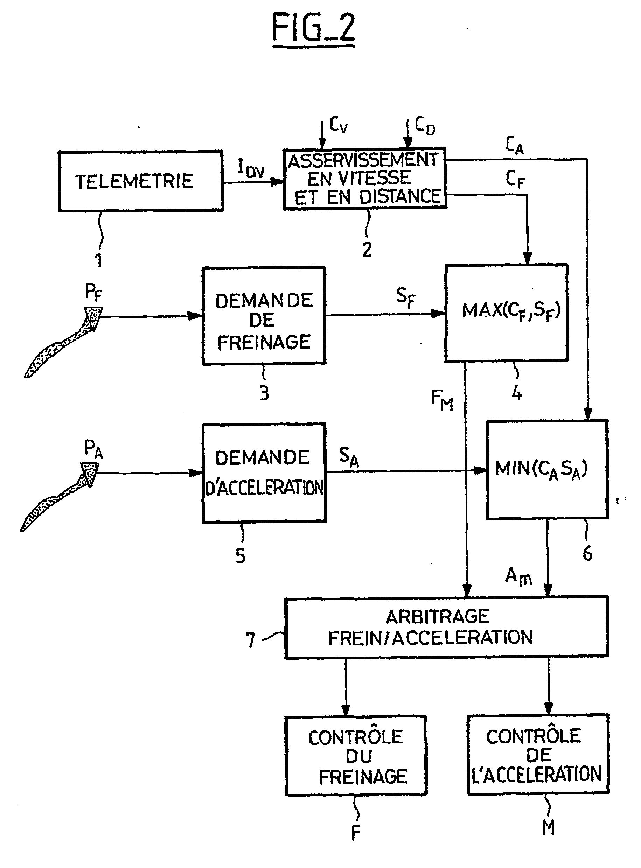

- la figure 2 : un exemple d'un système de mise en oeuvre du procédé de limitation de vitesse avec contrôle en distance selon l'invention .

L'invention est destinée à limiter la vitesse du véhicule équipé du système tout en contrôlant sa distance par rapport au véhicule qui le précède dans la même voie de circulation, alors que le conducteur garde le pied sur la pédale d'accélérateur ou appuie sur la pédale de frein sans désactiver le système.

Lorsque le conducteur a déclenché l'activation du procédé, à l'étape a), et fixé une consigne de vitesse à l'étape b), en l'absence vérifiée de véhicule cible plus lent sur la voie de circulation, c'est-à-dire soit en l'absence de véhicule constatée à l'étape c), soit en présence d'un véhicule plus rapide, constatée à l'étape d), le procédé réalise la fonction de limitation de vitesse classique, (étape e), qui limite le couple du moteur pour ne pas dépasser la vitesse de consigne que le conducteur lui-même a fixée. Pour des valeurs de vitesses véhicule inférieures à la consigne, la position de la pédale d'accélérateur imposée par le conducteur correspond à une accélération donnée, et pour des valeurs de vitesses supérieures à la consigne, le système limite automatiquement le couple du moteur. A cette valeur limite de couple correspond une position de référence de la pédale d'accélérateur, au delà de laquelle tout enfoncement supplémentaire est sans effet.

En présence d'un véhicule plus lent précédant le véhicule équipé roulant à la vitesse de consigne et appelé cible, constatée à l'étape d), le procédé réduit automatiquement la vitesse du véhicule équipé sans que le conducteur ait besoin de lever le pied de la pédale d'accélérateur ou de reprendre en mains le fonctionnement du véhicule, et maintient un temps de suivi entre ces deux véhicules qui est constant et de valeur réglable par le conducteur (étape f).

Cependant, le conducteur peut à tout moment réduire lui-même cette vitesse déterminée automatiquement par le système, en agissant sur la pédale d'accélérateur en levant le pied, ou en enfonçant la pédale de freins, sans provoquer la désactivation du système (étape g).

Si la distance entre les deux véhicules augmente, c'est-à-dire si la vitesse du véhicule cible de la voie détectée à l'étape h) augmente, le conducteur peut à nouveau ré-accélérer jusqu'à atteindre la consigne de vitesse ou de distance si le véhicule suivi est rattrapé à nouveau

Pour réaliser ces étapes en fonction de la présence ou de l'absence, sur la même voie de circulation, de véhicule plus lent que le véhicule équipé, le véhicule est équipé d'un système de mise en oeuvre qui comporte les différents éléments suivants.

Tout d'abord, il est équipé de premiers moyens d'estimation de la distance et de vitesse des véhicules circulant dans la même voie de circulation tels qu'un télémètre, un radar ou un lidar par exemple. Les moyens 1 de télémétrie délivrent des informations I_{DV} sur la distance et la vitesse des véhicules circulant dans la même voie que le véhicule, devant lui. Ces informations sont envoyées à des seconds moyens 2 d'asservissement du fonctionnement du moteur en vitesse et en distance, qui reçoivent par ailleurs en entrée une consigne de vitesse C_{V} et une consigne de distance C_{D}. Ces moyens d'asservissement délivrent une commande C_{A} d'accélération ou C_{F} de freinage aux organes concernés du véhicule, soit le moteur M, soit le système de freinage F.

Le système selon l'invention comporte de plus des troisièmes moyens 3 de reconstruction de la demande de freinage du conducteur, qui se traduit par une force d'appui sur la pédale de freins. Cette demande doit être homogène avec la commande de freinage délivrée par les moyens 2 d'asservissement, qui peut être une pression dans le circuit de freinage, un couple de décélération ou un débit de carburant par exemple. Les moyens 3 transforment la force d'appui P_{F} sur la pédale de freins en une grandeur homogène avec la commande de freinage et délivrent un signal S_{F} homogène à la commande de freinage C_{F}, ces deux signaux aboutissant en entrée de quatrièmes moyens 4 d'arbitrage entre eux. Les moyens 4 réalisent l'arbitrage entre ces deux demandes de freinage en déterminant le maximum F_{M} entre ces deux valeurs S_{F} et C_{F}, afin que soit prise en compte la demande la plus forte, que ce soit la commande automatique ou la demande du conducteur, pour contrôler le freinage.

Concernant la demande d'accélération du conducteur qui se traduit par une force d'appui P_{A} sur la pédale d'accélération, elle doit être rendue homogène à la commande d'accélération C_{A} délivrée par les moyens 2 d'asservissement du moteur afin de lui être comparée. Pour cela des cinquièmes moyens 5 de reconstruction de cette demande la transforment en une grandeur homogène SA avec la commande d'accélération C_{A} , qui peut être par exemple une demande de couple. Les deux signaux homogènes d'accélération SA et C_{A} aboutissent en entrée de sixièmes moyens 6 d'arbitrage entre eux, par détermination du minimum entre ces deux valeurs afin que soit prise en compte la demande la plus faible Aₘ pour contrôler l'accélération du véhicule.

Le système comporte enfin des septièmes moyens 7 d'arbitrage entre le contrôle du freinage F et le contrôle de l'accélération du véhicule M, en choisissant dans le mode nominal de toujours privilégier le freinage sur l'accélération. Ainsi, si le conducteur ou le système de limitation de vitesse demande simultanément du freinage et de d'accélération, c'est la consigne de décélération qui sera envoyée vers l'organe de freinage.

Si le système dispose en plus d'un dispositif offrant au conducteur la possibilité d'effectuer une reprise en mains, par l'intermédiaire d'un dispositif de type point dur mécanique en bout de course de la pédale d'accélérateur autrement appelé « kick down » par exemple, et que le conducteur actionne volontairement ce dispositif, la priorité est alors donnée aux demandes de freinage ou d'accélération du conducteur sur les demandes du système de limitation de vitesse.

## Revendications

1. Procédé de limitation de vitesse à contrôle en distance pour véhicule automobile équipé de moyens de télémétrie, destinés à estimer la distance et la vitesse des véhicules circulant dans la même voie de circulation que le véhicule, et de moyens d'asservissement du fonctionnement du moteur en vitesse et en distance, procédé qui réalise les étapes suivantes :
-a) activation du procédé ;
-b) choix d'une consigne de vitesse ;
-c) vérification de l'absence de véhicule cible plus lent dans la même voie de circulation, et si oui :
-e) limitation du couple moteur par action du conducteur sur la pédale d'accélération tant que la vitesse véhicule est inférieure à la vitesse de consigne et par contrôle automatique quand la vitesse de consigne est atteinte ou dépassée, avec possibilité de désactivation du procédé ;
**caractérisé en ce qu'**il réalise les étapes supplémentaires suivantes :
-d) vérification de la présence d'un véhicule cible plus lent précédant le véhicule équipé dans la même voie de circulation, et si oui :
-f) réduction automatique de la vitesse et maintien d'un temps de suivi constant entre les deux véhicules, réglable par le conducteur ;
-g) réduction, permise au conducteur, de la vitesse déterminée par le procédé, par un levé de pied sur la pédale d'accélérateur ou un appui sur le frein sans désactivation du procédé de limitation de vitesse ;
-h) vérification de la vitesse du véhicule cible, et en cas d'augmentation au-delà de la vitesse de consigne, possibilité d'accélération pour le conducteur du véhicule équipé jusqu'à la consigne de vitesse ou de distance si le véhicule cible est à nouveau rattrapé.

2. Système de mise en oeuvre du procédé de limitation de la vitesse à contrôle en distance pour véhicule automobile, selon la revendication 1 comprenant des premiers moyens de télémétrie destinés à estimer la distance et la vitesse des véhicules circulant dans la même voie de circulation que le véhicule équipé, et des seconds moyens d'asservissement du fonctionnement du moteur en vitesse et en distance, recevant en entrée une consigne de vitesse et une consigne de temps de suivi et délivrant une commande d'accélération et de freinage du véhicule, **caractérisé en ce qu'**il comporte de plus :
- des troisièmes moyens (3) de reconstruction de la demande de freinage (P_{F}) du conducteur, destinés à délivrer un signal (S_{F}) homogène avec la commande de freinage (C_{F}) délivrée par les moyens d'asservissement (2) précédents;
- des quatrièmes moyens (4) de reconstruction de la demande d'accélération (P_{A}) du conducteur, destinés à délivrer un signal (S_{A}) homogène avec la commande d'accélération (C_{A}) délivrée par les moyens d'asservissement (2) précédents ;
- des cinquièmes moyens (5) d'arbitrage entrer le signal (S_{F}) de freinage demandé par le conducteur et la commande de freinage (C_{F}) par calcul de la valeur maximale (F_{M}) entre ces deux valeurs de freinage ;
- des sixièmes moyens (6) d'arbitrage entre le signal (S_{A}) d'accélération demandée par le conducteur et la commande d'accélération (C_{A}) par calcul de la valeur minimale (Aₘ) entre ces deux valeurs d'accélération ;
- des septièmes moyens (7) d'arbitrage entre le contrôle du freinage (F_{M}) et celui de l'accélération (Aₘ) par choix prioritaire du freinage sur l'accélération, délivrant des signaux de commande à l'organe de freinage du véhicule et au moteur,
le système étant apte à permettre au conducteur, en cas de véhicule cible, un réduction de la vitesse par un levé de pied sur la pédale d'accélérateur ou un appui sur le frein sans désactivation du procédé.

3. Système selon la revendication 2, **caractérisé en ce que**, dans le cas où il dispose en plus d'un dispositif de reprise en mains par le conducteur, par point dur mécanique en bout de course de la pédale d'accélérateur notamment, et que ce dispositif est actionné par le conducteur, les septièmes moyens (7) d'arbitrage donnent la priorité aux demandes de freinage ou d'accélération du conducteur sur les demandes du système de limitation de vitesse.

## Claims

1. Distance-maintaining speed limiting method for a motor vehicle, fitted with telemetry means intended to estimate the distance and the speed of vehicles travelling in the same traffic lane as the vehicle fitted with these means, and with means for controlling the engine operation as a function of speed and distance, the method including the following steps:
-a) activating the method;
-b) choosing a set speed;
-c) checking for the absence of a slower target vehicle in the same traffic lane, and, if this is the case,
-e) limiting the engine torque by the driver's pressure on the accelerator pedal while the vehicle speed is below the set speed, and by automatic control if the set speed has been reached or exceeded, with provision for disabling the method;
**characterized in that** it includes the following additional steps:
-d) checking for the presence of a slower target vehicle in front of the equipped vehicle in the same traffic lane, and, if this is the case,
-f) automatically reducing the speed and maintaining a constant headway time between the two vehicles, this time being adjustable by the driver;
-g) allowing the driver to reduce the speed determined by the method, by relaxing his pressure on the accelerator or by pressing the brake, without disabling the speed limiting method;
-h) verifying the speed of the target vehicle, and, if this speed increases beyond the set speed, allowing the driver of the vehicle fitted with the above means to accelerate up to the set speed or the set distance if the target vehicle is approached again.

2. System for implementing the distance-maintaining speed limiting method for a motor vehicle according to Claim 1, comprising first telemetry means intended to estimate the distance and speed of vehicles travelling in the same traffic lane as the vehicle fitted with these means, and second means for controlling the operation of the engine as a function of speed and distance, receiving at the input a set speed and a set headway time and delivering an acceleration and braking command for the vehicle, **characterized in that** it additionally includes:
- third means (3) for reconstructing the driver's braking request (P_{F}), intended to deliver a signal (S_{F}) which is uniform with the braking command (C_{F}) delivered by the aforesaid control means (2);
- fourth means (4) for reconstructing the driver's acceleration request (P_{A}), intended to deliver a signal (S_{A}) which is uniform with the acceleration command (C_{A}) delivered by the aforesaid control means (2);
- fifth means (5) for arbitrating between the driver-requested braking signal (S_{F}) and the braking command (C_{F}) by calculating the maximum value (F_{M}) of these two braking values;
- sixth means (6) for arbitrating between the driver-requested acceleration signal (S_{A}) and the acceleration command (C_{A}) by calculating the minimum value (Aₘ) of these two acceleration values;
- seventh means (7) for arbitrating between the braking control (F_{M}) and the acceleration control (Aₘ) by giving braking priority over acceleration, these means delivering command signals to the braking device of the vehicle and to the engine,
the system being capable of allowing the driver, if a target vehicle is present, to reduce the speed by relaxing his pressure on the acceleration pedal, or by pressing on the brake, without disabling the method.

3. System according to Claim 2, **characterized in that**, if it additionally includes a device for returning control to the driver, using for example a mechanical friction point at the end of the travel of the accelerator pedal, the seventh arbitration means (7) give the driver's braking or acceleration requests priority over the requests of the speed limiting system.

## Patentansprüche

1. Verfahren zur Geschwindigkeitsbegrenzung mit Abstandskontrolle für ein Kraftfahrzeug, das mit Telemetriemitteln, die dazu bestimmt sind, den Abstand und die Geschwindigkeit der Fahrzeuge zu schätzen, die in der gleichen Fahrspur fahren wie das Fahrzeug, und mit Mitteln zur Regelung des Motorbetriebs bezüglich Geschwindigkeit und Abstand ausgestattet ist, wobei das Verfahren die folgenden Schritte ausführt:
- a)Aktivierung des Verfahrens;
- b)Wahl eines Geschwindigkeitssollwerts;
- c)Überprüfung der Abwesenheit eines langsameren Zielfahrzeugs in der gleichen Fahrspur, und wenn ja:
- e)Begrenzung des Antriebsdrehmoments durch Einwirkung des Fahrers auf das Beschleunigungspedal, so lange die Fahrzeuggeschwindigkeit geringer ist als die Sollgeschwindigkeit, und durch automatische Kontrolle, wenn die Sollgeschwindigkeit erreicht oder überschritten ist, mit der Möglichkeit der Deaktivierung des Verfahrens;
**dadurch gekennzeichnet, dass** es die folgenden zusätzlichen Schritte ausführt:
- d)Überprüfung des Vorhandenseins eines langsameren Zielfahrzeugs vor dem ausgestatteten Fahrzeug in der gleichen Fahrspur, und wenn ja:
- f)automatische Verringerung der Geschwindigkeit und Aufrechterhaltung einer konstanten Abstandszeit zwischen den zwei Fahrzeugen, die vom Fahrer einstellbar ist;
- g)dem Fahrer erlaubte Verringerung der durch das Verfahren bestimmten Geschwindigkeit durch Abheben des Fußes vom Beschleunigungspedal oder ein Drücken auf die Bremse ohne Deaktivierung des Geschwindigkeitsbegrenzungsverfahrens;
- h)Überprüfung der Geschwindigkeit des Zielfahrzeugs, und im Fall der Erhöhung über die Sollgeschwindigkeit hinaus, Möglichkeit der Beschleunigung für den Fahrer des ausgestatteten Fahrzeugs bis auf den Geschwindigkeits- oder Abstandssollwert, wenn das Zielfahrzeug erneut eingeholt wird.

2. System zur Anwendung des Verfahrens zur Begrenzung der Geschwindigkeit mit Abstandskontrolle für ein Kraftfahrzeug nach Anspruch 1, das erste Telemetriemittel, die dazu bestimmt sind, den Abstand und die Geschwindigkeit der Fahrzeuge zu schätzen, die in der gleichen Fahrspur fahren wie das ausgestattete Fahrzeug, und zweite Mittel zur Regelung des Motorbetriebs bezüglich der Geschwindigkeit und des Abstands aufweist, das am Eingang einen Geschwindigkeitssollwert und einen Abstandszeitsollwert empfängt und eine Beschleunigungs- und Bremssteuerung des Fahrzeugs liefert, **dadurch gekennzeichnet, dass** es außerdem aufweist:
dritte Mittel (3) zur Rekonstruktion der Bremsanforderung (P_{F}) des Fahrers, die dazu bestimmt sind, ein Signal (S_{F}) zu liefern, das mit der Bremssteuerung (C_{F}) homogen ist, die von den vorhergehenden Regelmitteln (2) geliefert wird; vierte Mittel (4) zur Rekonstruktion der Beschleunigungsanforderung (P_{A}) des Fahrers, die dazu bestimmt sind, ein Signal (S_{A}) zu liefern, das mit der Beschleunigungssteuerung (C_{A}) homogen ist, die von den vorhergehenden Regelmitteln (2) geliefert wird;
fünfte Entscheidungsmittel (5) zwischen dem Signal (S_{F}) der vom Fahrer angeforderten Bremsung und der Bremssteuerung (C_{F}) durch Berechnung des maximalen Werts (F_{M}) zwischen diesen zwei Bremswerten; sechste Entscheidungsmittel (6) zwischen dem Signal (S_{A}) der vom Fahrer angeforderten Beschleunigung und der Beschleunigungssteuerung (C_{A}) durch Berechnung des minimalen Werts (Aₘ) zwischen diesen zwei Beschleunigungswerten;
siebte Entscheidungsmittel (7) zwischen der Kontrolle des Bremsens (F_{M}) und derjenigen der Beschleunigung (Aₘ) durch vorrangige Wahl des Bremsens bezüglich der Beschleunigung, die Steuersignale an das Bremsorgan des Fahrzeugs und an den Motor liefern,
wobei das System geeignet ist, um dem Fahrer im Fall eines Zielfahrzeugs eine Verringerung der Geschwindigkeit durch ein Abheben des Fußes vom Beschleunigungspedal oder durch ein Drücken auf die Bremse ohne Deaktivierung des Verfahrens zu erlauben.

3. System nach Anspruch 2, **dadurch gekennzeichnet, dass** in dem Fall, in dem es zusätzlich über eine Vorrichtung der Übernahme durch den Fahrer durch einen mechanischen Druckpunkt verfügt, insbesondere am Ende des Wegs des Beschleunigungspedals, und wenn diese Vorrichtung vom Fahrer betätigt wird, die siebten Entscheidungsmittel (7) den Brems- oder Beschleunigungsanforderungen des Fahrers den Vorrang gegenüber den Anforderungen des Geschwindigkeitsbegrenzungssystems verleihen.
